# EUROPÄISCHE PATENTANMELDUNG

(11) **EP 1 970 156 A1**
(43) Veröffentlichungstag der Anmeldung: **17.09.2008**
(21) Anmeldenummer: 07005303.8
(22) Anmeldetag: 14.03.2007
(51) Int. Cl.: B23K 35/30, C22C 19/00, B23K 1/00

(54) **Lotlegierung und Verfahren zur Reparatur eines Bauteils**

(71) Anmelder: SIEMENS AKTIENGESELLSCHAFT, 80333 München (DE); MTU Aero Engines GmbH, 80995 München (DE)
(72) Erfinder: Heinz, Paul, 91052 Erlangen (DE); Singer, Robert, Professor, 91054 Erlangen (DE)

(57) **Zusammenfassung**

Viele bekannte Lotlegierungen nach dem Stand der Technik verwenden Silizium oder Bor als Schmelzpunkterniedriger, die jedoch spröde Phasen bilden, die sich unerwünscht auf die thermomechanischen Eigenschaften auswirken.

Die Lotlegierung umfasst Gallium und/oder Germanium, die bevorzugt die y'-Phase bilden und bessere mechanische Eigenschaften aufweisen.

## Beschreibung

Die Erfindung betrifft eine Lotlegierung gemäß Anspruch 1 und ein Verfahren zur Reparatur eines Bauteils gemäß Anspruch 29.

Bauteile müssen manchmal nach der Herstellung, beispielsweise nach dem Gießen oder nachdem sie im Einsatz waren und Risse gebildet haben, repariert werden.
Hierzu gibt es verschiedene Reparaturverfahren wie z. B. das Schweißverfahren, bei dem jedoch ein Substratmaterial des Bauteils mit aufgeschmolzen werden muss, was zu einer Schädigung insbesondere von gegossenen und gerichtet erstarrten Bauteilen sowie zur Verdampfung von Bestandteilen des Substratmaterials führen kann.
Ein Lotverfahren arbeitet gegenüber der Temperatur beim Schweißverfahren und damit gegenüber der Schmelztemperatur des Substratmaterials bei niedrigeren Temperaturen.
Das Lot soll aber trotzdem eine hohe Festigkeit aufweisen, damit der mit Lot aufgefüllte Riss oder die Vertiefung nicht zu einer Schwächung des gesamten Bauteils bei den hohen Einsatztemperaturen führt.

Es ist daher Aufgabe der Erfindung eine Lotlegierung und ein Verfahren zur Reparatur eines Bauteils aufzuzeigen, die bzw. das das oben genannte Problem überwindet.

Die Aufgabe wird gelöst durch ein Lot aus einer Lotlegierung gemäß Anspruch 1 und durch ein Verfahren gemäß Anspruch 33.

In den Unteransprüchen sind weitere vorteilhafte Maßnahmen aufgelistet, die beliebig in vorteilhafter Art und Weise miteinander kombiniert werden können.

Es zeigen:
- Figur 1: zwei Querschnittsansichten eines Bauteils während und nach einer Behandlung mit dem erfindungsgemäßen Lot,
- Figur 2: perspektivisch eine Turbinenschaufel,
- Figur 3: perspektivisch eine Brennkammer,
- Figur 4: eine Gasturbine
- Figur 5: eine Liste von Superlegierungen.

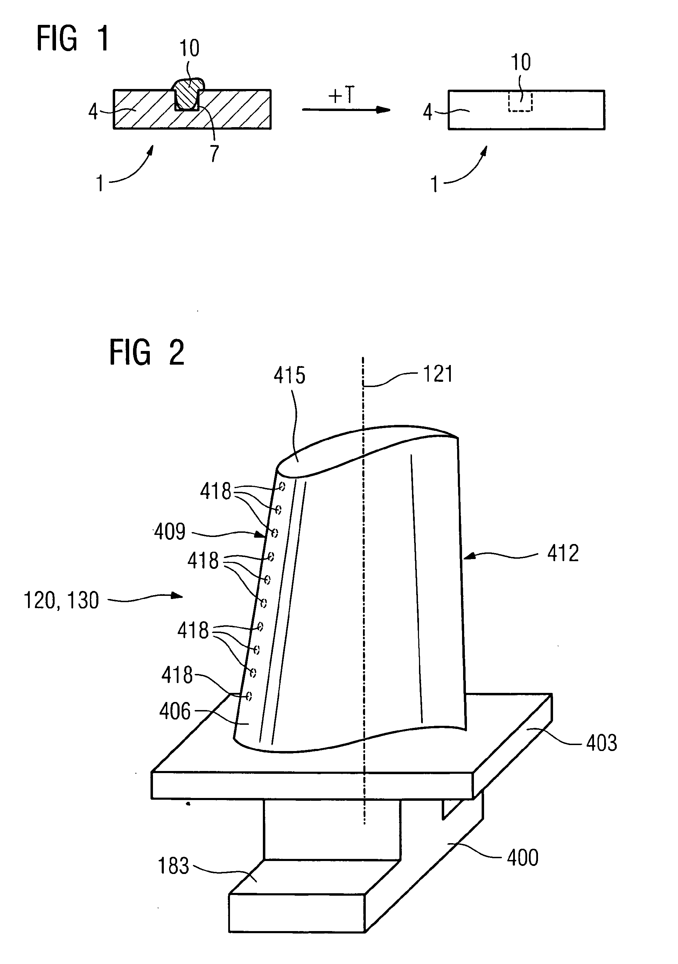

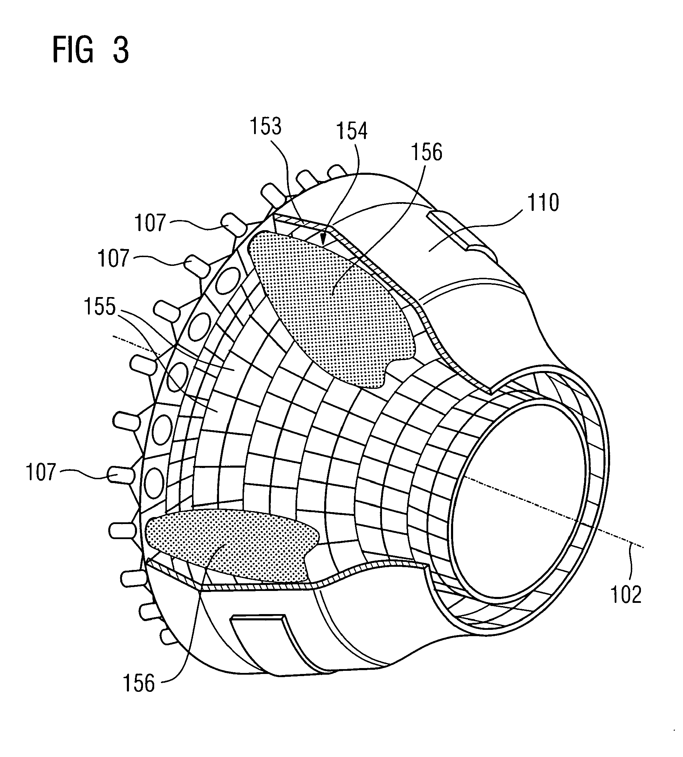

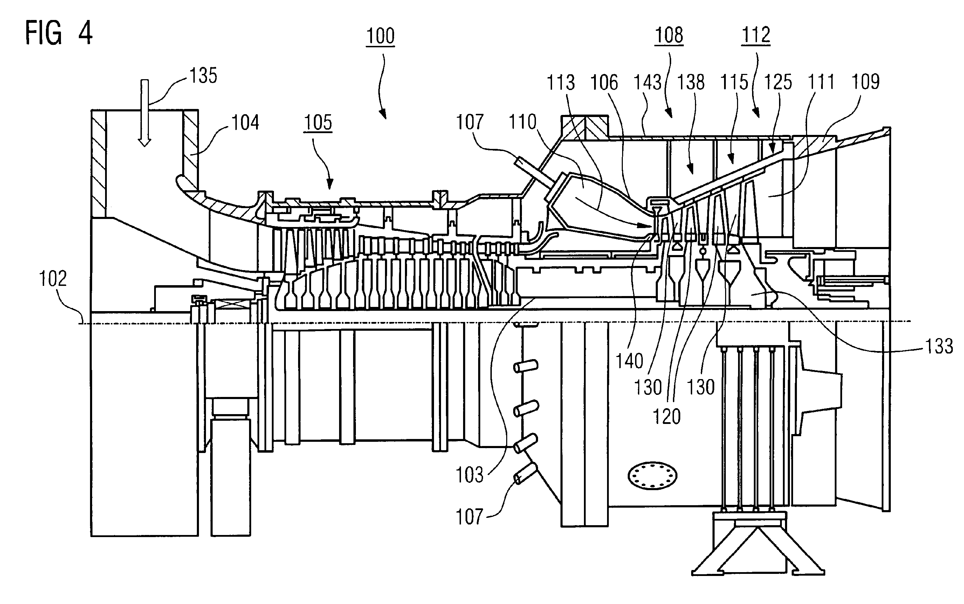

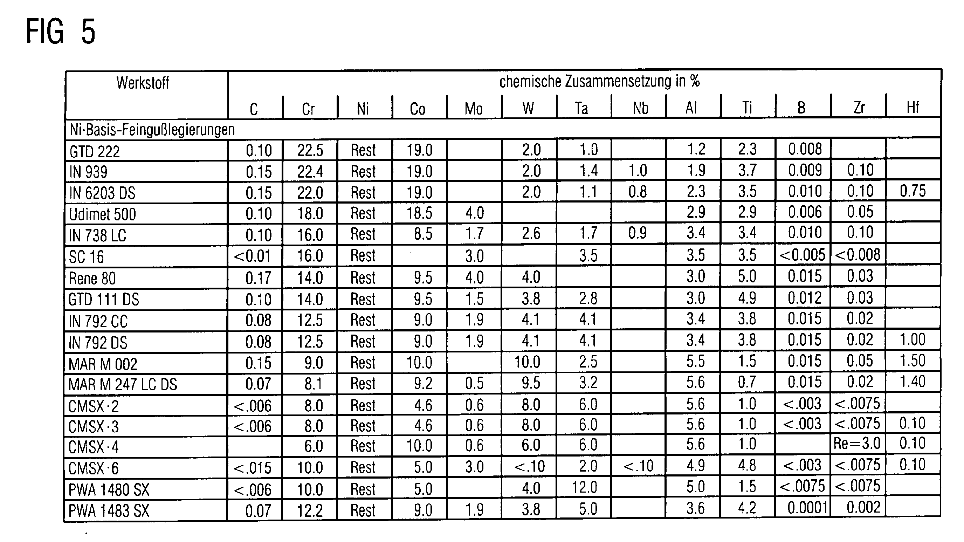

Figur 1 zeigt ein Bauteil 1, das mit einem Lot 10 aus einer erfindungsgemäßen Lotlegierung behandelt wird.
Das Bauteil 1 umfasst ein Substrat 4, das insbesondere bei Bauteilen für Hochtemperaturanwendungen, insbesondere bei Turbinenschaufeln 120, 130 (Fig. 2) oder Brennkammerelementen 155 (Fig. 3) für Dampf- oder Gasturbinen 100 (Fig. 4) aus einer nickel- oder kobaltbasierten Superlegierung besteht (Fig. 5).
Das Lot 10 kann vorzugsweise für alle Legierungen gemäß der Figur 5 verwendet werden.
Dies können vorzugsweise die bekannten Werkstoffe PWA 1483, PWA 1484 oder Rene N5 sein.
Anwendung findet das Lot 10 auch bei Schaufeln für Luftfahrzeuge.

Das Substrat 4 weist einen Riss 7 oder eine Vertiefung 7 auf, der bzw. die durch Löten aufgefüllt werden soll. Die Risse 7 bzw. Vertiefungen 7 sind vorzugsweise etwa 200µm breit und können bis zu 5mm tief sein.
Dabei wird das Lot 10 aus einer Lotlegierung in oder in die Nähe der Vertiefung 7 aufgebracht und durch eine Wärmebehandlung (+T) schmilzt das Lot 10 unterhalb einer Schmelztemperatur des Substrats 4 auf und füllt die Vertiefung 7 vollständig auf.

Die Lotlegierung 10 ist nickelbasiert und weist daher vorzugsweise als größten Anteil Nickel (Ni) auf.

Vorzugsweise wird ein binäres System aus Ni-Ge oder Ni-Ga verwendet.

Der Gehalt an Gallium (Ga) beträgt vorzugsweise mindestens 0.1wt%. Ebenso vorzugsweise beträgt der Germanium-Gehalt mindestens 0.1wt%. Schon diese geringen Anteile haben einen Einfluss auf das Lötverhalten von Nickel oder einer Nickellegierung.

Neben Rest Nickel sowie Gallium und/oder Germanium können vorzugsweise weitere Bestandteile Chrom (Cr), Kobalt (Co), Aluminium (Al) und Titan (Ti), Wolfram (W), Molybdän (Mo) oder Tantal (Ta)vorhanden sein, die falls verwendet, jeweils vorzugsweise mit einem Anteil von mindestens 0,1wt% verwendet werden.

Der Chromgehalt liegt vorzugsweise in einem Bereich von 2wt% - 10wt%, insbesondere in einem Bereich von 3wt% - 9wt%, wobei besonders bevorzugte Ausführungsbeispiele einen Chromgehalt von 4wt% oder 8wt% aufweisen, so dass bevorzugte Chromwerte auch in einem Bereich von 3wt% bis 5wt% oder 7wt% bis 9wt% liegen.

Der Aluminiumgehalt liegt vorzugsweise in einem Bereich von 1wt% - 5wt%, besonders vorzugsweise in einem Bereich von 2wt% - 4wt%. Ein besonders gutes Ausführungsbeispiel weist eine Lotlegierung mit einem Aluminiumgehalt von 3wt% auf.

Der Wolframgehalt liegt vorzugsweise in einem Bereich von 2wt% - 6wt%, besonders bevorzugt in einem Bereich von 3wt% - 5wt%. Besonders gute Ergebnisse wurde erzielt mit einem Wolframgehalt von 4wt%.

Der Kobaltgehalt liegt in einem Bereich von 2wt% - 10wt%, besonders bevorzugt in einem Bereich von 3wt% - 9wt%. Besonders bevorzugte Ausführungsbeispiele weisen einen Kobaltgehalt von 4wt% oder 8wt% auf, so dass besonders bevorzugte Kobaltgehalte bei 3wt% bis 5wt% oder 7wt% bis 9wt% liegen.

Der Gallium- oder Germanium-Gehalt beträgt vorzugsweise mindestens 3wt%, besonders vorzugsweise mindestens 6wt%. Vorzugsweise kann der Germanium- oder Gallium-Gehalt auf einen Maximalwert von 18wt% begrenzt werden. Ebenso vorzugsweise beträgt der Maximalgehalt an Gallium oder Germanium 13wt%, ganz besonders bevorzugt liegt dieser Maximalgehalt bei 8wt%.

Der Anteil an Gallium (Ga) in einer Nickelbasissuperlegierung als Lotlegierung liegt vorzugsweise zwischen 28wt% und 35wt%.

Der Anteil von Germanium liegt vorzugsweise zwischen 18wt% und 28wt%, insbesondere bei 26wt%.

Vorzugsweise ist die obige Auflistung der Bestandteile für das Lot von Nickel, Chrom, Kobalt, Wolfram, Aluminium, Gallium oder Germanium abschließend.

Vorzugsweise wird entweder nur Gallium oder Germanium verwendet.

Im Folgenden werden vorteilhaft verwendete Legierungen in abschließender Zusammensetzung aufgelistet, wobei die Legierung entweder nur Germanium oder nur Gallium oder auch Germanium und Gallium aufweist (G = Gallium und/oder Germanium, also nur Ga oder nur Ge oder Ga und Ge):
Ni-Cr-G
Ni-Co-G
Ni-W-G
Ni-A1-G

Ni-Cr-Co-G
Ni-Cr-W-G
Ni-Cr-Al-G
Ni-Co-W-G
Ni-Co-Al-G
Ni-W-Al-G

Ni-Cr-Co-W-G
Ni-Cr-Co-Al-G
Ni-Cr-W-Al-G
Ni-Co-W-Al-G

Ni-Cr-Co-W-Al-G.

Das Lot 10 enthält vorzugsweise kein Bor. Ebenso vorzugsweise enthält das Lot 10 kein Silizium und/oder kein Zirkonium. Auch auf die Zugabe von Rhenium kann vorzugsweise verzichtet werden.
Ebenso wird vorzugsweise kein Kohlenstoff verwendet.
Ebenso wird vorzugsweise kein Hafnium verwendet.

Das Lot 10 kann in einem isothermalen oder einem Temperaturgradienten-Verfahren mit dem Substrat 4 des Bauteils 1, 120, 130, 155 verbunden werden. Ein Gradientenverfahren bietet sich dann vorzugsweise an, wenn das Substrat 4 eine gerichtete Struktur, beispielsweise eine SX- oder DS-Struktur aufweist, sodass auch das Lot 10 anschließend eine gerichtete Struktur aufweist. Eine gerichtet erstarrte Struktur im Lot kann aber auch in einem isothermalen Verfahren durchgeführt werden.
Ebenso braucht das Bauteil 1 keine gerichtet erstarrte Struktur (sondern eine CC-Struktur) aufzuweisen.

Bei dem Aufschmelzen (Isothermales Verfahren oder Gradientenverfahren) wird vorzugsweise ein inertes Gas, insbesondere Argon verwendet, das die Chromabdampfung von dem Substrat 4 bei den hohen Temperaturen verringert oder es wird ein reduzierendes Gas (Argon/Wasserstoff) verwendet.
Das Lot 10 kann auch großflächig auf eine Oberfläche eines Bauteils 1, 120, 130, 155 aufgebracht werden, um eine Verdickung des Substrats 4, insbesondere bei hohlen Bauteilen zu erreichen. Vorzugsweise wird das Lot 10 dazu verwendet um Risse 7 oder Vertiefungen 7 aufzufüllen.

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet, insbesondere die Superlegierungen gemäß Figur 5. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrA1X-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Lotlegierung
aufweisend:
Gallium (Ga) und/oder Germanium (Ge),
Rest Nickel.

2. Lotlegierung nach Anspruch 1,
die Gallium (Ga) und kein Germanium (Ge) aufweist.

3. Lotlegierung nach Anspruch 1,
die Germanium (Ge) und kein Gallium (Ga) aufweist.

4. Lotlegierung nach Anspruch 1,
die Gallium (Ga) und Germanium (Ge) aufweist.

5. Lotlegierung nach Anspruch 1, 2, 3 oder 4,
bei der der Gallium- (Ga) oder Germanium- (Ge) Gehalt ≥ 3wt% beträgt,
insbesondere bei der der Gallium- oder Germanium-Gehalt 3wt% beträgt.

6. Lotlegierung nach Anspruch 1, 2, 3 oder 4,
bei der der Gallium- (Ga) oder Germanium- (Ge) Gehalt ≥ 6wt% beträgt,
insbesondere bei der der Gallium- oder Germanium-Gehalt 6wt% beträgt.

7. Lotlegierung nach Anspruch 1, 2, 3, 4, 5 oder 6,
bei der der Gallium- (Ga) oder Germanium- (Ge) Gehalt ≤ 18wt% beträgt,
insbesondere bei der der Gallium- oder Germanium-Gehalt 18wt% beträgt.

8. Lotlegierung nach Anspruch 1, 2, 3, 4, 5 oder 6,
bei der der Gallium- (Ga) oder Germanium- (Ge) Gehalt ≤ 13wt% beträgt,
insbesondere bei der der Gallium- oder Germanium-Gehalt 13wt% beträgt.

9. Lotlegierung nach Anspruch 1, 2, 3, 4, 5 oder 6,
bei der der Gallium- (Ga) oder Germanium- (Ge) Gehalt ≤ 8wt% beträgt,
insbesondere bei der der Gallium- oder Germanium-Gehalt 8wt% beträgt.

10. Lotlegierung nach Anspruch 1, 3 oder 4,
die 18wt% bis 28wt% Germanium (Ge) aufweist.

11. Lotlegierung nach Anspruch 10,
die 26wt% Germanium (Ge) aufweist.

12. Lotlegierung nach Anspruch 1, 2 oder 4,
die 28wt% bis 35wt% Gallium (Ga) aufweist.

13. Lotlegierung nach einem der Ansprüche 1 bis 12,
die Chrom (Cr) enthält,
insbesondere mindestens 0.1wt%.

14. Lotlegierung nach einem der Ansprüche 1 bis 13,
die Kobalt (Co) enthält,
insbesondere mindestens 0.1wt%.

15. Lotlegierung nach einem oder mehreren der vorherigen Ansprüche 1 bis 14,
die Aluminium (A1) enthält,
insbesondere mindestens 0.1wt%.

16. Lotlegierung nach einem oder mehreren der vorherigen Ansprüche 1 bis 15,
die Wolfram (W) enthält,
insbesondere mindestens 0.1wt%.

17. Lotlegierung nach einem oder mehreren der vorherigen Ansprüche 1 bis 16,
die Titan (Ti) enthält,
insbesondere mindestens 0.1wt%.

18. Lotlegierung nach einem oder mehreren der vorherigen Ansprüche 1 bis 17,
die Molybdän (Mo) enthält,
insbesondere mindestens 0.1wt%.

19. Lotlegierung nach einem oder mehreren der vorherigen Ansprüche 1 bis 18,
die Tantal (Ta) enthält,
insbesondere mindestens 0.1wt%.

20. Lotlegierung nach einem der Ansprüche 1 bis 16,
die aus Nickel (Ni) und Gallium (Ga) oder Germanium (Ge) und einem einzigen weiteren Legierungselement ausschließlich ausgewählt aus der Gruppe: Chrom (Cr), Kobalt (Co), Wolfram (W) und Aluminium (A1) besteht.

21. Lotlegierung nach einem der Ansprüche 1 bis 16,
die aus Nickel (Ni) und Gallium (Ga) oder Germanium (Ge) und zwei weiteren Legierungselementen ausschließlich ausgewählt aus der Gruppe: Chrom (Cr), Kobalt (Co), Wolfram (W) und Aluminium (Al) besteht.

22. Lotlegierung nach einem der Ansprüche 1 bis 16,
die aus Nickel (Ni) und Gallium (Ga) oder Germanium (Ge) und drei weiteren Legierungszusätze ausschließlich ausgewählt aus der Gruppe: Chrom (Cr), Kobalt (Co), Wolfram (W) und Aluminium (A1) besteht.

23. Lotlegierung nach einem der Ansprüche 1 bis 16,
die aus Nickel (Ni), Chrom (Cr), Kobalt (Co), Wolfram (W), Aluminium (Al) und Gallium (Ga) oder Germanium (Ge) besteht.

24. Lotlegierung nach einem oder mehreren der vorherigen Ansprüche,
die kein Silizium (Si), kein Bor (B) und/oder kein Zirkonium (Zr) enthält.

25. Lotlegierung nach einem oder mehreren der vorherigen Ansprüche,
bei der Nickel (Ni) den größten Gewichtsanteil aufweist.

26. Lotlegierung nach einem oder mehreren der vorherigen Ansprüche,
bei der Nickel (Ni) den größten Volumenanteil aufweist.

27. Lotlegierung nach einem oder mehreren der vorherigen Ansprüche,
bei dem der Chromgehalt 2wt% - 10wt%,
insbesondere 3wt% - 9wt%,
beträgt.

28. Lotlegierung nach einem oder mehreren der vorherigen Ansprüche,
bei dem der Aluminiumgehalt 1wt% - 5wt%,
insbesondere 2wt% - 4wt%,
beträgt.

29. Lotlegierung nach einem oder mehreren der vorherigen Ansprüche,
bei der der Wolframgehalt 2wt% - 6wt%,
insbesondere 3wt% - 5wt%,
beträgt.

30. Lotlegierung nach einem oder mehreren der vorherigen Ansprüche,
bei der der Kobaltgehalt 2wt% - 10wt%,
insbesondere 3wt% - 9wt%,
beträgt.

31. Lotlegierung nach Anspruch 1, 2, 3, 5, 6, 7, 8, 9, 10, 11 oder 12,
die aus einem binären System aus Nickel (Ni) und entweder aus Germanium (Ge) oder Gallium (Ga) besteht.

32. Lotlegierung nach Anspruch 1, 4, 5, 6, 7, 8, 9, 10, 11 oder 12,
die aus einem ternären System Nickel (Ni), Gallium (Ga) und Germanium (Ge) besteht.

33. Verfahren zur Reparatur eines Bauteils (1),
bei dem ein Lot (10) gemäß einem oder mehreren der vorherigen Ansprüche 1 bis 32 verwendet wird.

34. Verfahren nach Anspruch 33,
bei dem das Lotverfahren isothermal durchgeführt wird.

35. Verfahren nach Anspruch 33,
bei dem das Lotverfahren mittels eines Temperaturgradienten durchgeführt wird.

36. Verfahren nach Anspruch 33, 34 oder 35,
bei dem das Lot (40) gerichtet,
insbesondere einkristallin,
erstarrt wird.

37. Verfahren nach Anspruch 33, 34, 35 oder 36,
bei dem das Lot (10) für die Legierungen PWA 1483, PWA 1484 oder Rene N5 verwendet wird.

38. Verfahren nach Anspruch 33, 34, 35, 36 oder 37,
bei dem ein Substrat (4) des Bauteils (1, 120, 130, 155) gerichtet,
insbesondere einkristallin,
erstarrt ist.
